# EUROPEAN PATENT APPLICATION

(11) **EP 4 807 225 A1**
(43) Date of publication of application: **16.09.2026**
(21) Application number: 24888915.6
(22) Date of filing: 09.09.2024
(51) Int. Cl.: F16K 24/04, F16K 51/02, F16K 31/122

(54) **VALVE ASSEMBLY FOR VACUUM SYSTEM**

(30) Priority: 09.11.2023 KR 20230154340
(71) Applicant: VTEC Co., Ltd., Busan 46972 (KR)
(72) Inventor: CHO, Ho-Young, Seoul 08007 (KR)
(74) Representative: Cabinet Chaillot
(86) International application number: PCT/KR2024/013634
(87) International publication number: WO 2025/100719

(57) **Abstract**

The present invention relates to a valve assembly disposed between a vacuum pump and adsorption pads in a vacuum system to enable the pads to discharge air. The valve assembly comprises: a body having an installation space formed in an internal passage; a valve plate seated in the space to be able to move up/down; and an air hole having a variable configuration due to an air slit formed in a contact portion between the valve plate and an upper recessed portion of the space. At the beginning of an exhaust operation, air is discharged temporarily through an open passage. Subsequently, when the plate is moved up, air is discharged at a micro level through the air hole formed in the contact portion between the plate and the upper recessed portion of the space.

## Description

### TECHNICAL FIELD

The present invention relates to an air valve assembly, and more particularly, to a valve assembly that is capable of being suitably applied for a vacuum system.

### BACKGROUND ART

Generally, a "vacuum system" refers to a device including a vacuum pump operated by high-speed compressed air and an adsorption pad connected to a suction-side port of the vacuum pump and also refers to a system that operates a vacuum pump to exhaust an inner space of a pad and then adsorb and grip an object by using a vacuum and negative pressure generated due to the exhaust of the inner space, thereby transferring the object to a predetermined position by operating a robotic means.

Here, if a diameter of the port is too large, an achievable vacuum level of the device decreases. However, if the diameter is too small, a speed at which the device reaches a maximum vacuum level thereof becomes slower. Thus, an appropriate valve that is capable of simultaneously satisfying such the opposite problem situations is required for the port. Actually, a flexible valve or an UP/DOWN plate valve is mainly used as such the valve.

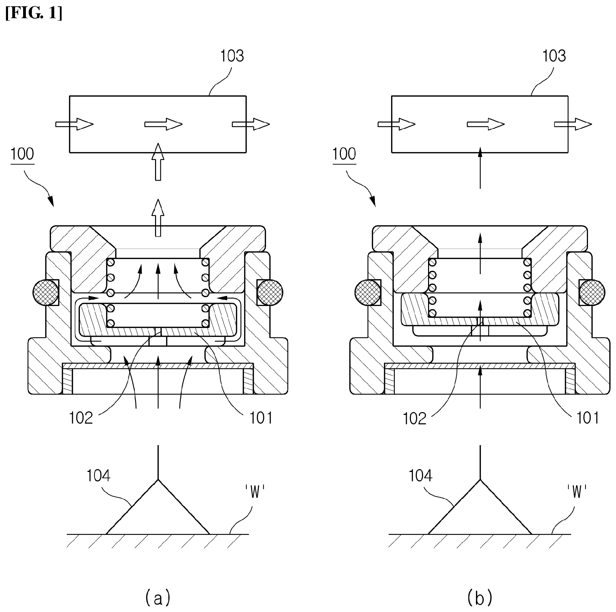

FIG. 1 illustrates an example of a conventional plate valve 100. Referring to the drawing, when compressed air passes through a vacuum pump 103 at a high speed, internal air of the pad 104 is introduced into the vacuum pump 103 via the valve 100 and then is discharged to the outside together with the compressed air. In this process, vacuum and a negative pressure for gripping an object W are generated inside the vacuum pump 103 and the pad 104.

As illustrated in FIG. 1(a), in an original state, the plate valve 100 is in an open state with the plate 101 at a "DOWN" position to allow for instantaneous discharge of a large amount of air at the beginning of an operation. Subsequently, as illustrated in FIG. 1(b), while the plate 101 moves to an "UP" position, the air is discharged only through a central micro-hole 102 of the plate 101. The micro-holes 102 serve to maintain a vacuum level of the device while increasing in vacuum level of the device.

In this manner, it is intended to simultaneously solve the problems of the reachable vacuum level of the device and the speed at which the vacuum level is reached.

In a configuration of the valve 100,

the micro-hole 102 is an element that plays an important role in relation to the vacuum level of the device, however, here:
firstly, since the processing of the hole 102 is required to be on a considerably fine scale, its formation and production become almost impossible in a production-technical aspect;
secondly, there is a problem in which foreign substances, especially dusts on a surface of the object, is floated during the operation of the device to block the hole 102; and
thirdly, in the event of such the failure, there is not only a lack of corresponding self-recovery capability but also emergency measures are not easy.

Due to these problems, it is very difficult to actually apply the valve 100.

Alternatively, it is also possible to consider a method, in which the hole 102 is largely processed, or the number of holes increases. However, these methods are contrary to the intent of simultaneously solving the problems of the vacuum level and the reaching speed and thus are not considered here. In these cases, particularly, there is a high risk of reducing the vacuum level of the device.

### [Prior Art Document]

Korean Utility Model Registration No. 20-0300952
Korean Patent Publication No. 10-2015-0016793
Korean Patent Registration No. 10-1303749
Korean Patent Registration No. 10-2570475

### DISCLOSURE OF THE INVENTION

### TECHNICAL PROBLEM

The present invention is proposed to solve problems of a plate valve according to the related art. An object of the present invention is to provide a valve assembly for a vacuum system, which simultaneously solves problems of a vacuum level and a reaching speed of a device, and which is easy to be manufactured and does not have a risk of a malfunction during an operation.

### TECHNICAL SOLUTION

A valve assembly,
which is disposed between a vacuum pump and an adsorption pad in a vacuum system to exhaust the pad,
the valve assembly comprising:
a body that is made of a vertical through-type material and comprises a space formed to be expanded inside passages to install a valve plate;
the valve plate that is vertically movably seated in the space, wherein a flow path, through which upper and lower portions of the passages are connected to each other, is formed between inner walls of the space;
an elastic spring disposed in the passages to elastically control movement of the plate; and
an air slit formed in a portion at which the plate and an upper recessed portion of the space are in contact with each other when the plate moves upward,
wherein
the air slit is configured to
form an air hole by allowing the plate and the upper recessed portion to be in contact with each other when the plate moves upward so that the flow path and the passages are connected to each other.

The air slit may be configured to
formed in either the plate or the upper recessed portion,
more preferably, in a side of the plate.

The spring may be coaxially disposed in the passages, wherein one end of the spring presses the plate to elastically support the position of the plate.

The plate may include an air guide formed on a lower surface of the plate to connect the passage and the flow path.

Preferably,
the plate may have an 'U'-shaped cross-section,
wherein one end of the spring may be inserted into the plate, and
the air slit may be formed in an upper cross-sectional portion of an edge of the plate.

### ADVANTAGEOUS EFFECTS

According to the valve assembly of the present invention, when the large amount of air is discharged instantaneously at the beginning of the operation to become in the 'UP' state of the plate, the exhaust may be performed only through the air hole that is finally formed in the air slit. In this manner, it is possible to quickly reach the maximum vacuum level of the device.

Furthermore, since the air slit is formed merely by providing the groove in the specific portion of the element, it may be easy to be manufactured, and during the operation, there may be no risk that the air slit or the air hole is blocked or damaged before and after the exhaust.

### BRIEF DESCRIPTION OF THE DRAWINGS

FIG. 1 is a cross-sectional view of a valve assembly according to the related art.
FIG. 2 is a perspective view of a valve assembly according to an embodiment of the present invention.
FIG. 3 is a cross-sectional view of FIG. 2.
FIG. 4 is a perspective view of a valve plate applied in FIG. 2.
FIG. 5 is a view illustrating an operation in an initial vacuum state of FIG. 3.
FIG. 6 is a view illustrating a continuous operation in FIG. 5.
FIG. 7 is a view illustrating a vacuum release operation in FIG. 6.

### [Description of the Symbols]

- 10.: Valve assembly
- 11.: Body
- 12.: Plate
- 13.: Spring
- 14.: Air hole
- 15.: First passage
- 16.: Second passage
- 17.: Space
- 18.: Upper recessed portion
- 19.: Flow path
- 20.: Air slit
- 21.: Air guide
- P.: Vacuum pump
- S.: Pad
- W.: Object

### MODE FOR CARRYING OUT THE INVENTION

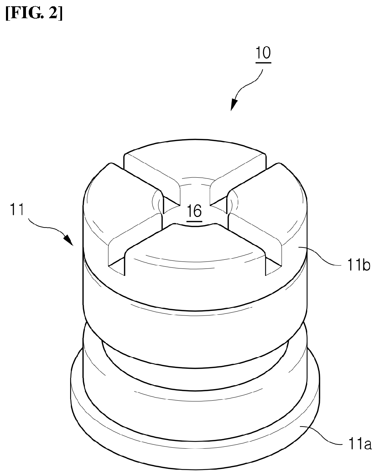

The features and operational effects of a 'valve assembly for a vacuum system' (hereinafter, 'referred to as a 'valve assembly') of the present invention, which are described or not described above, will become more apparent through the description of preferred embodiments described below with reference to the attached drawings. In FIG. 2 and below, a valve assembly according to the present invention is indicated by reference numeral 10.

The valve assembly 10 of the present invention is based on a valve assembly that is disposed between a vacuum pump and an adsorption pad in a vacuum system to exhaust the pad.

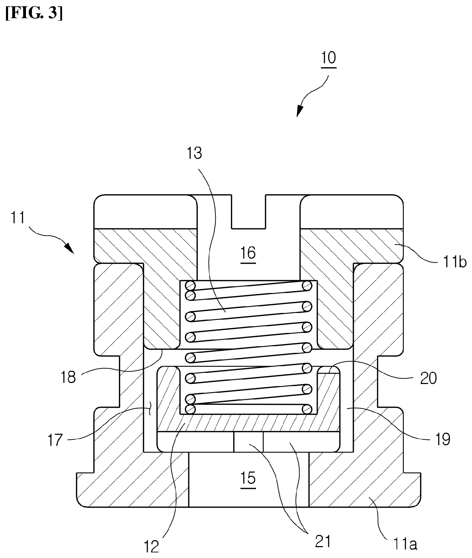

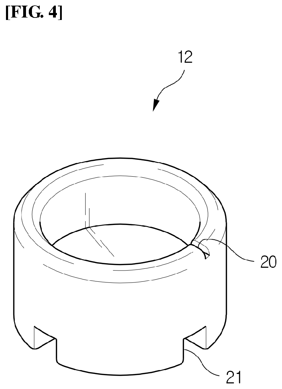

Referring to FIGS. 2 to 6, the valve assembly 10 includes a vertical through-type body 11, a valve plate 12 that is movably installed inside the body 11, a spring 13 that elastically supports the valve plate 12, and an air hole 14 that is variably formed according to an operation of the valve assembly 10.

In detail, the body 11 is made of a vertical through-type material and includes a space 17 that is expanded to accommodate the valve plate 12 inside central passages 15 and 16. The passages 15 and 16 may be divided into a lower first passage 15 and an upper second passage 16 with respect to a position of the space 17. The body 11 is constituted by a lower portion 11a and an upper portion 11b that is fitted into and coupled to the lower portion 11a. This configuration is suitable for forming the space 17 within the body 11. Reference numeral 18 is an upper recessed portion of the space 15.

Here, the plate 12 is seated inside the space 17 so as to be able to move upward and downward. Here, a flow path 19 connecting the first and second passages 15 and 16 is formed between an inner wall of the space 17 and the plate 12. For reference, an air guide 21 connecting the first passage 15 and the flow path 19 is formed on a bottom surface of the plate 12.

The spring 13 is disposed in the second passage 16 to function to control a position and movement of the plate 12. In detail, the spring 13 is coaxially disposed in the second passage 16, and one end of the spring 13 presses the surface of the plate 12 to elastically support the position and movement of the plate 12. In this embodiment, the plate 12 has an U-shaped cross-section, and one end of the spring 13 is inserted in the plate 12. However, it may be designed differently in consideration of the relationship between the plate 12 and the spring 13.

The valve assembly 10 of the present invention includes an air slit 20 formed at a portion at which the plate 12 is in contact with the upper recessed portion 18 of the space 17 when the plate 12 moves upward. Thus, an air hole 14 is formed between the plate 12 and the upper recessed portion 18, which are in contact with each other, and thus, connection between the flow path 19 and the first and second passages 15 and 16 is established by using the air hole 14 as a medium.

In detail, the air slit 20 may be provided in the form of a groove on either the plate 12 or the upper recessed portion 18, but for ease of manufacturing, in this embodiment, the air slit 20 is formed in a side of the plate 12. In addition, the plate 12 has an 'U'-shaped cross-section. Here, the air slit 20 is formed in an upper cross-sectional portion of the plate 12.

In addition, when the plate 12 and the upper recessed portion 18 are in contact with each other, their corresponding surfaces cover an open side of the air slit 20 to form the air hole 14. In this sense, the configuration of the air hole 14 is variable.

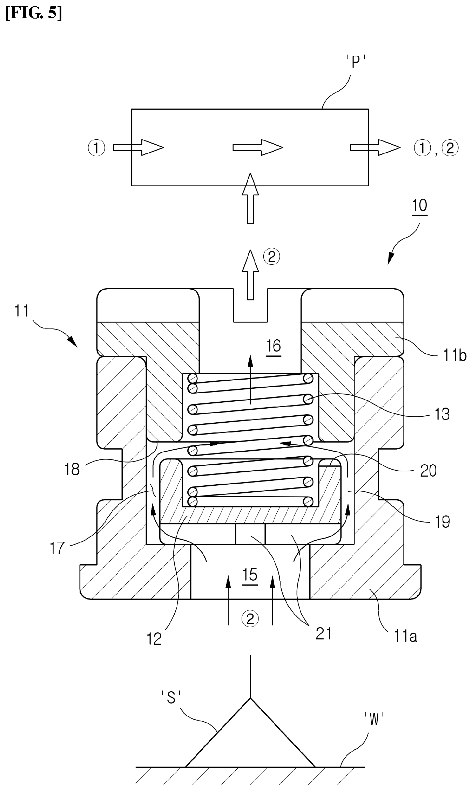

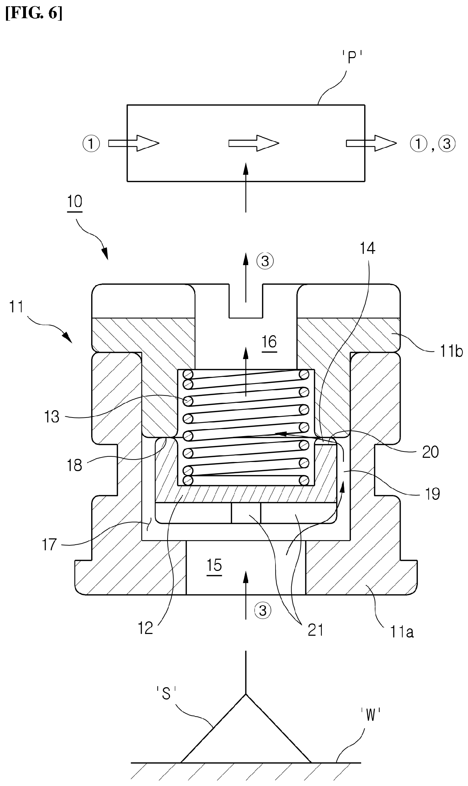

Referring to FIGS. 5 and 6, the valve assembly 10 of the present invention is disposed between the vacuum pump P and the adsorption pad S in the vacuum system.

When the vacuum system is operated, compressed air supplied at a high speed passes through the vacuum pump P and then is discharged (see an arrow ①). Here, the air inside the pad S is sequentially guided through the first passage 15 of the body 11 → the flow path 19 → the second passage 16 and then is introduced into the vacuum pump P. Then, the air is discharged to the outside together with the compressed air (see an arrow ②). In this process, vacuum and a negative pressure are generated inside the vacuum pump P and the pad S.

First, referring to FIG. 5, initially, since the valve assembly 10 is in the "DOWN" state of the plate 12, a vacuum line connected through the first passage 15 → the flow path 19 → the second passage 16 within the body 11 is completely opened. Thus, the air inside the pad S is discharged in an instant, and the discharged air at this time causes the plate 12 to move upward.

Referring to FIG. 6, in the "UP" state in which the plate 12 moves upward, the vacuum line is closed because the plate 12 and the upper recessed portion 18 are in contact with each other. However, here, the vacuum line is connected through the air hole 14 that is only formed at a contact portion due to the contact, thereby enabling fine discharge (see an arrow ③) of the pad S.

As a result, it is possible to quickly reach a maximum vacuum level of the device, and there is no risk that the air hole 14 is blocked or causes an obstruction during this process.

Through this series of processes, the vacuum and the negative pressure are generated inside the pad S, and an object W is adsorbed and gripped by the generated negative pressure. Thereafter, the object W is transferred to a predetermined position through a robotic device. In addition, when the transfer is completed, the pad S needs to be quickly separated from the object W.

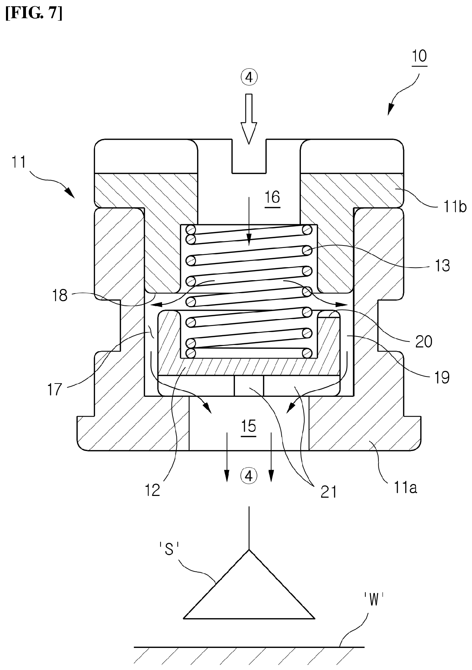

Referring to FIG. 7, in order to separate the pad S, the compressed air is directly supplied to the second passage 16. In this state, the plate 12 is in the "DOWN" state. Thus, the compressed air is supplied (see an arrow ④) to the pad S via the second passage 16 → the flow path 19 → the first passage 15. Therefore, the vacuum and the negative pressure inside the pad S are instantly released.

## Claims

1. A valve assembly, which is disposed between a vacuum pump and an adsorption pad in a vacuum system to exhaust the pad, the valve assembly comprising:
a body (11) that is made of a vertical through-type material and comprises a space (17) formed to be expanded inside passages (15, 16) to install a valve plate (12);
the valve plate (12) that is vertically movably seated in the space (17), wherein a flow path (19), through which upper and lower portions of the passages (15, 16) are connected to each other, is formed between inner walls of the space (17);
an elastic spring (13) disposed in the passages (15, 16) to elastically control movement of the plate (12); and
an air slit (20) formed in a portion at which the plate (12) and an upper recessed portion (18) of the space (17) are in contact with each other when the plate (12) moves upward,
wherein the air slit (20) is configured to form an air hole (14) by allowing the plate (12) and the upper recessed portion (18) to be in contact with each other when the plate (12) moves upward so that the flow path (19) and the passages (15, 16) are connected to each other.

2. The valve assembly of claim 1, wherein the air slit (20) is formed in either the plate (12) or the upper recessed portion (18).

3. The valve assembly of claim 2, wherein the air slit (20) is formed in a side of the plate (12).

4. The valve assembly of claim 1, wherein the spring (13) is coaxially disposed in the passages (15, 16),
wherein one end of the spring (13) presses the plate (12) to elastically support the position of the plate (12).

5. The valve assembly of claim 1, wherein the plate (12) comprises an air guide (21) formed on a lower surface of the plate (12) to connect the passage (15) and the flow path (19).

6. The valve assembly of claim 1, wherein the plate (12) has an 'U'-shaped cross-section, wherein one end of the spring (13) is inserted into the plate (12), and
the air slit (20) is formed in an upper cross-sectional portion of an edge of the plate (12).
